# EUROPÄISCHE PATENTANMELDUNG

(11) **EP 3 211 423 A1**
(43) Veröffentlichungstag der Anmeldung: **30.08.2017**
(21) Anmeldenummer: 16156917.3
(22) Anmeldetag: 23.02.2016
(51) Int. Cl.: G01N 35/00, B01L 9/06

(54) **AUTOMATISCHES ANALYSEGERÄT MIT AUFNAHMEPOSITIONEN FÜR FLÜSSIGKEITSBEHÄLTER**

(71) Anmelder: Siemens Healthcare Diagnostics Products GmbH, 35041 Marburg (DE)
(72) Erfinder: Korn, Matthias, 56355 Nastaetten (DE); Bernhard, Joachim, 61184 Karben (DE); Otto, Ralf, 65195 Wiesbaden (DE)

(57) **Zusammenfassung**

Die vorliegende Erfindung liegt auf dem Gebiet der automatischen Analysegeräte und betrifft die automatische Platzierung von Flüssigkeitsbehältern (300) in dafür vorgesehenen Aufnahmepositionen (14). Die Aufnahmepositionen (14) sind mit Schwingungsdämpfern (500) ausgestattet, um ein Herausspritzen von Flüssigkeit zu vermeiden.

## Beschreibung

Die vorliegende Erfindung liegt auf dem Gebiet der automatischen Analysegeräte und betrifft die automatische Platzierung von Flüssigkeitsbehältern in dafür vorgesehenen Aufnahmepositionen.

Heutige Analysegeräte, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messzellen, Reaktionsbehältern und Reagenzflüssigkeitsbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten, erfolgt vielfach, indem ein Aliquot einer Körperflüssigkeit eines Patienten gleichzeitig oder nacheinander mit einer oder mehreren Reagenzflüssigkeiten in einem Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weitergeleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Für den räumlichen Transfer von Flüssigkeitsbehältern sind häufig Greifer zum Erfassen, Halten und Freigeben eines Flüssigkeitsbehälters vorgesehen, die an einem horizontal und vertikal bewegbaren Transferarm verbunden sind. In der EP-A2-2308588 ist eine Vorrichtung zum Transfer eines Flüssigkeitsbehälters, insbesondere zum Transfer von röhrchenförmigen Reaktionsgefäßen (Küvetten), innerhalb eines automatischen Analysegeräts beschrieben. Die Vorrichtung weist einen passiven, elastisch verformbaren Greifer zum kraftschlüssigen Erfassen und Halten eines Flüssigkeitsbehälters auf und eignet sich, eine einzelne, in einer Aufnahmeposition platzierte Küvette aufzunehmen, diese an eine Zielposition zu transportieren und sie dort in einer weiteren Aufnahmeposition abzusetzen.

Zur Aufnahme oder mit anderen Worten zum Erfassen einer in einer Aufnahmeposition aufrecht stehenden Küvette wird der Greifer durch eine horizontale Bewegung des Transferarms seitlich an die Küvette herangeführt und gegen diese gedrückt bis sich der elastische Greifer öffnet und die Küvette kraftschlüssig umschließt. Durch eine Aufwärtsbewegung des Transferarms wird die vom Greifer gehaltene Küvette aus der Aufnahmeposition gehoben und kann nun an eine beliebige Zielposition im Analysegerät, beispielsweise zu einer Aufnahmeposition in einer Messstation transportiert werden. Zur Abgabe oder mit anderen Worten zur Freigabe der Küvette in der Zielposition wird die Küvette zunächst durch eine Abwärtsbewegung des Transferarms in die Aufnahmeposition abgesenkt und der Greifer wird durch eine horizontale Bewegung des Transferarms seitlich von der Küvette weggezogen. Dadurch wird die Küvette gegen die Innenwand der Aufnahmeposition gedrückt und übt eine Kraft auf den Greifer aus, der sich schließlich bei weiterem Verfahren öffnet und die Küvette freigibt.

Problematisch ist, dass es bei der Freigabe der Küvette durch das seitliche Wegziehen des Greifers passieren kann, dass Flüssigkeit aus der Küvette herausspritzt, weil die Küvette beim Wegziehen des Greifers in der Aufnahmeposition zunächst leicht kippen kann und dann, wenn der Greifer sich öffnet, entgegen der Verfahrrichtung des Greifers beschleunigt wird und gegen die Innenwand der Aufnahmeposition schlägt. Verspritzende Flüssigkeit in dem Analysegerät kann dazu führen, dass empfindliche Bauteile beschädigt werden und dass eine erhöhte Infektionsgefahr für einen Benutzer besteht, insbesondere dann, wenn die verspritzende Flüssigkeit menschliche oder tierische Körperflüssigkeiten, wie Blut oder Urin enthält.

Die der Erfindung zugrundeliegende Aufgabe besteht also darin, in einem automatischen Analysegerät die automatische Platzierung von Flüssigkeitsbehältern in dafür vorgesehenen Aufnahmepositionen so zu verbessern, dass das Herausspritzen von Flüssigkeit vermieden wird.

Die Aufgabe wird erfindungsgemäß dadurch gelöst, dass an oder in einer Aufnahmeposition für einen Flüssigkeitsbehälter mindestens ein Element zur Dämpfung von Schwingungen des Flüssigkeitsbehälters vorgesehen ist, so dass ein bei der Freigabe eines Flüssigkeitsbehälters in der Aufnahmeposition auftretender Impuls des Flüssigkeitsbehälters reduziert wird.

Gegenstand der vorliegenden Erfindung ist demnach ein automatisches Analysegerät mit
a. einer Vorrichtung zum Transfer eines Flüssigkeitsbehälters, die Vorrichtung umfassend einen horizontal und vertikal bewegbaren Transferarm und einen mit dem Transferarm verbundenen Greifer zum Erfassen, Halten und Freigeben eines Flüssigkeitsbehälters, und mit
b. mehreren Aufnahmepositionen zur formschlüssigen Aufnahme jeweils eines Flüssigkeitsbehälters,
wobei eine oder mehrere oder alle Aufnahmepositionen, in die mit der Vorrichtung zum Transfer eines Flüssigkeitsbehälters ein Flüssigkeitsbehälter transferierbar ist, mindestens ein Element zur Dämpfung von Schwingungen eines Flüssigkeitsbehälters aufweisen, so dass ein bei der Freigabe eines Flüssigkeitsbehälters in der Aufnahmeposition auftretender Impuls des Flüssigkeitsbehälters reduziert wird.

Das Element zur Dämpfung von Schwingungen (im Folgenden auch Schwingungsdämpfer genannt) kann aus einer Blattfeder bestehen, also einem bogenförmig vorgespannten Streifen aus Federstahl mit flach-rechteckigem Profil.

Alternativ kann das Element zur Dämpfung von Schwingungen ein elastisch gelagertes Kontaktelement umfassen. Das Kontaktelement ist das Element des Schwingungsdämpfers, das mit dem Flüssigkeitsbehälter in direkten Kontakt kommt, wenn ein Flüssigkeitsbehälter in eine Aufnahmeposition eingesetzt wird.

Vorzugsweise weist das Kontaktelement eine kugelförmige Oberfläche auf, um ein Verkratzen der Oberfläche des Flüssigkeitsbehälters zu vermeiden. Dies ist besonders wichtig, wenn es sich bei den Flüssigkeitsbehältern um Küvetten handelt, die in einem optischen Verfahren verwendet werden sollen.

Das Kontaktelement kann beispielsweise aus Stahl, Glas, Kunststoff oder einem anderen möglichst abriebfesten Material bestehen.

Die elastische Lagerung des Kontaktelements wird vorzugsweise durch eine Verbindung mit einem elastischen Trägerelement hergestellt.

Das elastische Trägerelement kann eine Feder und/oder einen Körper aus einem elastomeren Material, vorzugweise aus Silikon- oder Naturkautschuk, umfassen oder daraus bestehen.

Das Element zur Dämpfung von Schwingungen kann im Inneren einer Aufnahmeposition angebracht sein, oder es kann außerhalb der Aufnahmeposition angebracht sein, bevorzugt am Rand der Öffnung der Aufnahmeposition.

Es ist möglich, dass eine oder mehrere oder alle Aufnahmepositionen zwei, drei, vier oder mehr Elemente zur Dämpfung von Schwingungen eines Flüssigkeitsbehälters aufweisen. Vorzugsweise sind die Elemente zur Dämpfung dann symmetrisch angeordnet. Dies hat den Vorteil, dass der Flüssigkeitsbehälter zentriert in der Aufnahmeposition gehalten wird.

Die Vorrichtung zum Transfer eines Flüssigkeitsbehälters umfasst vorzugsweise einen passiven Greifer zum kraftschlüssigen Erfassen und Halten eines Flüssigkeitsbehälters. Der Greifer kann einstückig und elastisch verformbar ausgestaltet sein. Der Greifer befindet sich vorzugsweise in einem Spannungszustand, so dass es, wenn er mit ausreichender Kraft gegen einen Flüssigkeitsbehälter gedrückt wird, zu einem Schnappeffekt kommt, und der Greifer sich öffnet und den Flüssigkeitsbehälter umgreift und festhält. Umgekehrt öffnet sich der Greifer erst wieder und gibt den Flüssigkeitsbehälter frei, wenn der Greifer mit ausreichender Kraft von einem fixierten Flüssigkeitsbehälter wegbewegt wird.

Unter einer "Aufnahmeposition" ist im Wesentlichen eine Buchse mit einem Boden und einer Umwandung oder eine Bohrung gemeint, die so dimensioniert und ausgestaltet ist, dass sie einen gegebenen Flüssigkeitsbehälter formschlüssig aufzunehmen vermag und ihn dadurch in senkrechter oder nahezu senkrechter Stellung hält.

Automatische Analysegeräte weisen bekanntermaßen eine Vielzahl von Aufnahmepositionen an verschiedenen Orten und für verschiedene Flüssigkeitsbehälter auf, wie beispielsweise mehrere Aufnahmepositionen für Primärprobengefäße, die die zu analysierende Probe enthalten(z.B. Blutentnahmeröhrchen mit Blut, Plasma oder Serum eines Patienten) und/oder mehrere Aufnahmepositionen für ein- oder mehrkammrige Reagenzflüssigkeitsbehälter, die ein oder mehrere Reagenzflüssigkeiten enthalten, die für die Durchführung eines analytischen Testverfahrens benötigt werden und/oder mehrere Aufnahmepositionen für Reaktionsgefäße, wie beispielsweise Küvetten, in denen die Primärprobe mit dem oder den Reagenzien zu einem Testansatz vermischt wird, der dann in einer Messstation gemessen wird.

Die vorliegende Erfindung eignet sich insbesondere für die Platzierung von unverschlossenen Flüssigkeitsbehältern in dafür vorgesehenen Aufnahmepositionen, wie beispielsweise für den Transfer von typischerweise unverschlossenen Reaktionsgefäßen, wie beispielsweise Küvetten, von einer Inkubationseinrichtung in eine Messstation. Eine Inkubationseinrichtung weist üblicherweise eine Vielzahl von Aufnahmepositionen auf, in denen jeweils ein Reaktionsgefäß gelagert wird, in das dann ein Probenflüssigkeitsvolumen und mindestens eine Reagenzflüssigkeitsvolumen pipettiert werden. Häufig weisen derartige Inkubationseinrichtungen auch Heizvorrichtungen zur Temperierung der Reaktionsansätze auf. Nach ausreichender Inkubationsdauer wird ein Reaktionsgefäß dann mit der automatischen Transfervorrichtung entnommen und in eine Aufnahmeposition einer Aufnahmeeinrichtung einer Messstation transferiert. In diesem Fall sind besonders bevorzugterweise die Aufnahmepositionen der Aufnahmeeinrichtung der Messstation mit einem oder mehreren Elementen zur Dämpfung von Schwingungen eines Reaktionsgefäßes ausgestattet, da diese immer unverschlossene und mit Flüssigkeit gefüllt Reaktionsgefäße aufnehmen.

In einer Ausführungsform besteht das Element zur Dämpfung von Schwingungen aus einem in einer Einbuchtung einer Innenwand der Aufnahmeposition angebrachten elastischen Trägerelement, wie beispielsweise einem Kautschukwürfel, und einem daran befestigten Kontaktelement mit kugelförmiger Oberfläche, wie z.B. einer Stahlkugel, wobei die kugelförmige Oberfläche des Kontaktelements in das Innere der Aufnahmeposition ragt.

Vorzugsweise kann die Aufnahmeposition zur Anbringung mehrerer solcher Schwingungsdämpfer auch zwei, drei, vier oder mehr Einbuchtungen in ihrer Innenwand aufweisen.

In einer anderen Ausführungsform besteht das Element zur Dämpfung von Schwingungen aus einem außerhalb der Aufnahmeposition, bevorzugt am Rand der Öffnung der Aufnahmeposition angebrachten elastischen Trägerelement, wie beispielsweise einem Kautschukstift oder einer Spiralfeder, und einem daran befestigten Kontaktelement mit kugelförmiger Oberfläche, wie z.B. einer Kunststoffkugel, wobei die kugelförmige Oberfläche des Kontaktelements leicht über die Öffnung der Aufnahmeposition ragt.

Vorzugsweise können mehrere solcher Schwingungsdämpfer, z.B. zwei, drei, vier oder mehr, außerhalb der Aufnahmeposition angebracht sein.

In noch einer anderen Ausführungsform besteht das Element zur Dämpfung von Schwingungen aus einer außerhalb der Aufnahmeposition, bevorzugt am Rand der Öffnung der Aufnahmeposition angebrachten Blattfeder, die zumindest teilweise leicht über die Öffnung der Aufnahmeposition ragt.

Vorzugsweise können mehrere Blattfedern, z.B. zwei, drei, vier oder mehr, außerhalb der Aufnahmeposition angebracht sein.

Die Erfindung wird im Folgenden anhand einer Zeichnung erläutert.

### Darin zeigen

- FIG. 1: ein erfindungsgemäßes automatisches Analysegerät;
- FIG. 2: die Platzierung einer Küvette gemäß dem Stand der Technik;
- FIG. 3-5: Ausführungsformen schwingungsdämpfender Elemente an Aufnahmepositionen.

Gleiche Teile sind in allen Figuren mit denselben Bezugszeichen versehen.

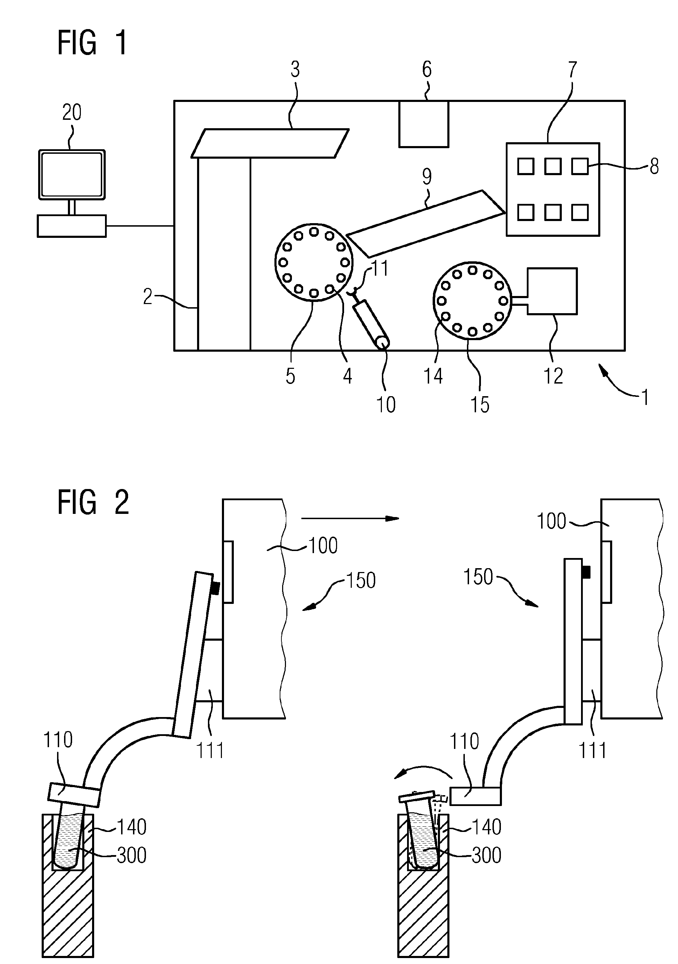

FIG. 1 ist eine schematische Darstellung eines automatischen Analysegeräts 1 mit einigen darin enthaltenen Bauteilen. Hierbei werden nur die wichtigsten Bauteile stark vereinfacht dargestellt, um die grundsätzliche Funktion des automatischen Analysegeräts 1 zu erläutern, ohne hierbei detailliert die einzelnen Teile jedes Bauteils darzustellen.

Das automatische Analysegerät 1 ist dafür ausgebildet, vollautomatisch verschiedenste Analysen von Blut oder anderen Körperflüssigkeiten durchzuführen, ohne dass hierfür Aktivitäten eines Benutzers notwendig wären. Notwendige Eingriffe eines Benutzers beschränken sich vielmehr auf Wartung oder Reparatur und Nachfüllarbeiten, wenn z.B. Küvetten nachgefüllt oder Flüssigkeitsbehälter ausgetauscht werden müssen.

Die Patientenproben werden dem automatischen Analysegerät 1 auf nicht näher dargestellten Schlitten über eine Zuführungsschiene 2 zugeführt. Informationen hinsichtlich der pro Probe durchzuführenden Analysen können beispielsweise mittels auf den Probengefäßen angebrachten Strichcodes übergeben werden, die in dem automatischen Analysegerät 1 ausgelesen werden. Aus den Probengefäßen werden mit Hilfe einer ersten Pipettiervorrichtung 3 Probenaliquots mittels einer Pipettiernadel entnommen.

Die Probenaliquots werden ebenfalls nicht näher dargestellten Küvetten zugeführt, die in Aufnahmepositionen 4 einer drehbaren, auf 37 °C temperierten Inkubationseinrichtung 5 angeordnet sind. Die Küvetten werden aus einem Küvettenvorratsbehälter 6 entnommen. In dem auf ca. 8-10 °C gekühlten Reagenzgefäßvorratsbehälter 7 werden Reagenzgefäße 8 mit verschiedenen Reagenzflüssigkeiten aufbewahrt. Reagenzflüssigkeit wird mittels der Pipettiernadel einer zweiten Pipettiervorrichtung 9 aus einem Reagenzgefäß 8 entnommen und zur Bereitstellung eines Reaktionsansatzes in eine Küvette, die bereits ein Probenaliquot enthält, abgegeben. Die Küvette mit dem Reaktionsansatz wird von einem Transferarm 10 mit einem Greifer 11 von der Inkubationseinrichtung 5 in eine Aufnahmeposition 14 der drehbaren Aufnahmevorrichtung 15 für die photometrische Messstation 12 transportiert, wo die Extinktion des Reaktionsansatzes gemessen wird. Alle Aufnahmepositionen 14 sind mit hier nicht näher dargestellten Schwingungsdämpfern ausgestattet, so dass beim Absetzen einer mit einem Reaktionsansatz befüllten Küvette durch den Greifer 11 ein in einer Aufnahmeposition 14 auftretender Impuls der Küvette reduziert wird und so ein Herausspritzen der Flüssigkeit vermieden wird.

Der gesamte Prozess wird von einer Steuereinheit 20, wie z.B. von einem über eine Datenleitung angeschlossenen Rechner gesteuert, unterstützt durch eine Vielzahl weiterer, nicht näher dargestellter elektronischer Schaltungen und Mikroprozessoren innerhalb des automatischen Analysegeräts 1 und seiner Bauteile.

FIG. 2 ist eine schematische Darstellung der Platzierung einer Küvette 300 in einer Aufnahmeposition 140 in einem automatischen Analysegerät gemäß dem Stand der Technik. Die Vorrichtung 150 zum Transfer einer Küvette 300 umfasst einen horizontal und vertikal bewegbaren Transferarm 100 und einen mit dem Transferarm 100 verbundenen Greifer 110 zum Erfassen, Halten und Freigeben einer Küvette. Der Greifer 110 ist über ein flexibles Zwischenelement 111 mit dem Transferarm 100 verbunden.

Von links nach rechts wird gezeigt, wie das Absetzen der Küvette 300 in die Aufnahmeposition 140 im Stand der Technik verläuft. Nachdem die Küvette 300 zunächst durch eine Abwärtsbewegung des Transferarms 100 in die Aufnahmeposition 140 abgesenkt wurde, wird der Greifer 110 durch eine horizontale Bewegung des Transferarms 100 in Pfeilrichtung seitlich von der Küvette 300 weggezogen. Dadurch wird die Küvette 300 gegen die Innenwand der Aufnahmeposition 140 gedrückt und übt eine Kraft auf den Greifer 110 aus, der sich schließlich bei weiterem Verfahren öffnet und die Küvette 300 freigibt. Wie links dargestellt, kippt die Küvette 300 beim Wegziehen des Greifers 110 zunächst leicht und wird dann, wenn der Greifer 110 sich öffnet, wie rechts dargestellt, entgegen der Verfahrrichtung des Greifers 110 beschleunigt und schlägt gegen die Innenwand der Aufnahmeposition 140. Dabei besteht die Gefahr, dass Reaktionsflüssigkeit aus der Küvette 300 herausspritzt.

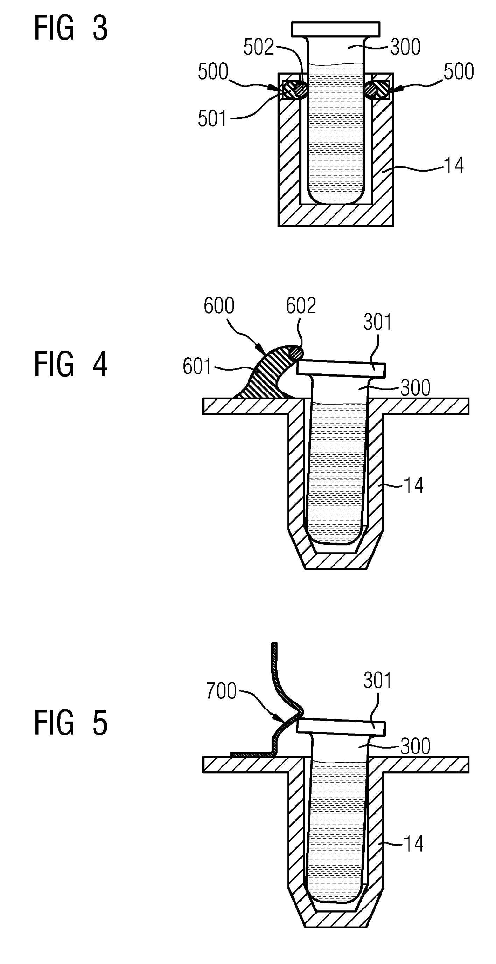

FIG. 3 ist eine schematische Darstellung einer Ausführungsform einer Aufnahmeposition 14 einer Aufnahmevorrichtung mit einer Küvette 300 in einem nicht näher dargestellten, erfindungsgemäßen Analysegerät. Die Aufnahmeposition 14 ist mit zwei gegenüberliegenden Elementen 500 zur Dämpfung von Schwingungen ausgestattet. Jedes Element 500 besteht aus einem eiförmigen Kautschukkörper 501 als dämpfendem Element und einer damit verbundenen Stahlkugel 502 als Kontaktelement. Die beiden schwingungsdämpfenden Elemente 500 sind jeweils in einer Einbuchtung in der Innenwand der Aufnahmeposition 14 angebracht, so dass die Oberflächen der Stahlkugeln 502 teilweise in das Innere der Aufnahmeposition 14 ragen. Die Küvette 300 wird so senkrecht und zentriert in der Aufnahmeposition 14 positioniert.

FIG. 4 ist eine schematische Darstellung einer anderen Ausführungsform einer Aufnahmeposition 14 einer Aufnahmevorrichtung mit einer Küvette 300 in einem nicht näher dargestellten, erfindungsgemäßen Analysegerät. Die Aufnahmeposition 14 ist mit einem Element 600 zur Dämpfung von Schwingungen ausgestattet. Das Element 600 besteht aus einem hakenförmigen Kautschukkörper 601 als dämpfendem Element und einer damit verbundenen Stahlkugel 602 als Kontaktelement. Das schwingungsdämpfende Element 600 ist am oberen Rand der Aufnahmeposition 14 angebracht, so dass die Oberfläche der Stahlkugel 602 den Küvettenflansch 301 berührt und so die Küvette 300 leicht fixiert.

FIG. 5 ist eine schematische Darstellung noch einer anderen Ausführungsform einer Aufnahmeposition 14 einer Aufnahmevorrichtung mit einer Küvette 300 in einem nicht näher dargestellten, erfindungsgemäßen Analysegerät. Die Aufnahmeposition 14 ist mit einem Element 700 zur Dämpfung von Schwingungen ausgestattet. Das Element 700 besteht aus einer vorgespannten, gebogenen Blattfeder aus Federstahl. Die schwingungsdämpfende Blattfeder 700 ist am oberen Rand der Aufnahmeposition 14 angebracht, so dass sie den Küvettenflansch 301 berührt und so die Küvette 300 leicht fixiert.

### BEZUGSZEICHENLISTE

- 1: Analysegerät
- 2: Zuführungsschiene
- 3: Pipettiervorrichtung
- 4: Aufnahmeposition
- 5: Inkubationseinrichtung
- 6: Küvettenvorratsbehälter
- 7: Reagenzgefäßvorratsbehälter
- 8: Reagenzgefäß
- 9: Pipettiervorrichtung
- 10, 100: Transferarm
- 11, 110: Greifer
- 12: Messstation
- 14, 140: Aufnahmeposition
- 15: Aufnahmevorrichtung
- 20: Steuereinheit
- 111: Zwischenelement
- 150: Transfervorrichtung
- 300: Küvette
- 301: Küvettenflansch
- 501, 601: Kautschukkörper
- 502, 602: Stahlkugel

- 500, 600, 700: Element zur Dämpfung von Schwingungen

## Patentansprüche

1. Automatisches Analysegerät (1) mit
a. einer Vorrichtung zum Transfer eines Flüssigkeitsbehälters, die Vorrichtung umfassend einen horizontal und vertikal bewegbaren Transferarm (10) und einen mit dem Transferarm verbundenen Greifer (11) zum Erfassen, Halten und Freigeben eines Flüssigkeitsbehälters, und mit
b. mehreren Aufnahmepositionen (14) zur formschlüssigen Aufnahme jeweils eines Flüssigkeitsbehälters,
**dadurch gekennzeichnet, dass**
eine oder mehrere oder alle Aufnahmepositionen (14), in die mit der Vorrichtung zum Transfer eines Flüssigkeitsbehälters ein Flüssigkeitsbehälter transferierbar ist, mindestens ein Element (500, 600, 700) zur Dämpfung von Schwingungen eines Flüssigkeitsbehälters aufweisen, so dass ein bei der Freigabe eines Flüssigkeitsbehälters in der Aufnahmeposition (14) auftretender Impuls des Flüssigkeitsbehälters reduziert wird.

2. Automatisches Analysegerät (1) gemäß Anspruch 1, bei dem das Element (500) zur Dämpfung von Schwingungen im Inneren der Aufnahmeposition (14) angebracht ist.

3. Automatisches Analysegerät (1) gemäß Anspruch 1, bei dem das Element (600, 700) zur Dämpfung von Schwingungen außerhalb der Aufnahmeposition (14) angebracht ist, bevorzugt am Rand der Öffnung der Aufnahmeposition (14).

4. Automatisches Analysegerät (1) gemäß einem der Ansprüche 1 bis 3, bei dem das Element (700) zur Dämpfung von Schwingungen aus einer Blattfeder besteht.

5. Automatisches Analysegerät (1) gemäß einem der Ansprüche 1 bis 4, bei dem das Element (500, 600) zur Dämpfung von Schwingungen ein elastisch gelagertes Kontaktelement (502, 602) umfasst.

6. Automatisches Analysegerät gemäß Anspruch 5, bei dem das Kontaktelement (502, 602) eine kugelförmige Oberfläche aufweist.

7. Automatisches Analysegerät (1) gemäß einem der Ansprüche 5 und 6, bei dem das Kontaktelement (502, 602) aus Stahl, Glas oder Kunststoff besteht.

8. Automatisches Analysegerät (1) gemäß einem der Ansprüche 5 bis 7, bei dem die elastische Lagerung des Kontaktelements (502, 602) durch eine Verbindung mit einem elastischen Trägerelement (501, 601) hergestellt ist.

9. Automatisches Analysegerät (1) gemäß Anspruch 8, bei dem das elastische Trägerelement (501, 601) eine Feder und/oder einen Körper aus einem elastomeren Material, vorzugweise aus Silikon- oder Naturkautschuk, umfasst.

10. Automatisches Analysegerät (1) gemäß einem der vorhergehenden Ansprüche, wobei die Vorrichtung zum Transfer eines Flüssigkeitsbehälters einen passiven Greifer (11) zum kraftschlüssigen Erfassen und Halten eines Flüssigkeitsbehälters umfasst.

11. Automatisches Analysegerät (1) gemäß einem der vorhergehenden Ansprüche, wobei eine oder mehrere oder alle Aufnahmepositionen (14) zwei, drei, vier oder mehr Elemente (500, 600, 700) zur Dämpfung von Schwingungen eines Flüssigkeitsbehälters aufweisen.

12. Automatisches Analysegerät (1) gemäß Anspruch 11, wobei die Elemente (500, 600, 700) zur Dämpfung von Schwingungen eines Flüssigkeitsbehälters symmetrisch angeordnet sind.

13. Automatisches Analysegerät (1) gemäß einem der vorhergehenden Ansprüche mit einer Inkubationseinrichtung (5) mit mehreren Aufnahmepositionen (4) für jeweils ein Reaktionsgefäß und mit einer einer Messstation (12) zugeordneten Aufnahmeeinrichtung (15) mit mehreren Aufnahmepositionen (14) für jeweils ein Reaktionsgefäß, wobei zumindest die Aufnahmepositionen (14) der der Messstation (12) zugeordneten Aufnahmeeinrichtung (15), in die mit der Transfervorrichtung ein Reaktionsgefäß transferierbar ist, mindestens ein Element (500, 600, 700) zur Dämpfung von Schwingungen eines Flüssigkeitsbehälters aufweisen.
